# EUROPEAN PATENT APPLICATION

(11) **EP 2 067 809 A1**
(43) Date of publication of application: **10.06.2009**
(21) Application number: 07807810.2
(22) Date of filing: 14.09.2007
(51) Int. Cl.: C08G 64/14, C08G 64/18

(54) **POLYCARBONATE AND METHOD FOR PRODUCING THE SAME**

(30) Priority: 26.09.2006 JP 2006260504
(71) Applicant: Teijin Chemicals, Ltd., Chiyoda-ku Tokyo 100-0013 (JP)
(72) Inventor: MIYAKE, Toshiyuki, Tokyo 1000013 (JP); DOI, Tomokiyo, Tokyo 1000013 (JP); HIGAKI, Yuji, Tokyo 1000013 (JP)
(74) Representative: Albrecht, Thomas
(86) International application number: PCT/JP2007/068488
(87) International publication number: WO 2008/038608

(57) **Abstract**

There is provided a polycarbonate which is excellent in both surface slipperiness and abrasion resistance.

The polycarbonate is a polycarbonate which has a group having a siloxane structure and an aryl group at terminals in a specific ratio.

## Description

### Field of the Invention

The present invention relates to a polycarbonate and a production method thereof. More specifically, it relates to a polycarbonate having a siloxane structure and an aryl structure at terminals of polymer chain in a specific ratio.

### Background Art

A polycarbonate is a polymer resulting from linking aromatic or aliphatic dihydroxy compounds together by a carbonic ester. In particular, a polycarbonate (hereinafter may be referred to as "PC-A") obtained from 2,2-bis(4-hydroxyphenyl)propane (commonly known as bisphenol A) has excellent properties including transparency, heat resistance and impact resistance and is used in a number of fields.

In the field of optics such as lenses and optical disks, the polycarbonate has been receiving attention due to its properties such as impact resistance, transparency and low water absorbability and occupies an important position. Further, even in the electronics field in which inorganic materials have been mainstream, demand for the polycarbonate has been dramatically increasing in recent years, due to its wide material selectivity and a high degree of freedom of device structure. Along with such an expansion of applications, novel polycarbonates having higher performance than existing polycarbonates have been increasingly desired.

Meanwhile, in the field of electrophotographic photoreceptors, the polycarbonate is predominantly used as a binder for a photosensitive layer. Initially, PC-A has been predominantly used. However, the PC-A has a problem that crystallization or gelation occurs at the time of formation of a coating film and solvent cracking is liable to occur. For this reason, a polycarbonate (hereinafter may be referred to as "PC-Z") obtained from 1,1-bis(4-hydroxyphenyl)cyclohexane (commonly known as bisphenol Z) is predominantly used at present. As to the binder for a photosensitive layer, those having higher performance have been demanded, along with an improvement in image quality in recent years. Major properties required for the binder polymer are surface slipperiness and abrasion resistance, and various proposals have heretofore been made.

One of them is a method of having a polycarbonate contain a siloxane. The siloxane has a characteristic of decreasing surface free energy and repelling water and also has a characteristic of being liable to be exposed at the surface in the case of wet molding. Hence, the siloxane is effective in improving slidability even by addition in a small amount. Accordingly, a siloxane-containing polycarbonate shows excellent slipperiness with a contact material such as paper or cleaning blade.

The following three methods can be used to have a polycarbonate contain a siloxane.
1. Method of blending a siloxane resin such as silicone oil with a polycarbonate (see Patent Literatures 1 and 2).
2. Method of preparing a copolymerized polycarbonate using a dihydroxy compound having a siloxane structure as a monomer (see Patent Literatures 3 to 6).
3. Method of preparing a terminal-modified polycarbonate using a monophenol compound having a siloxane structure as a terminal blocking agent (see Patent Literatures 7 to 12).

All of these methods are effective in modifying surface slidability by addition of the siloxane site. However, the method "1" has a problem that phase separation attributed to incompatibility of the siloxane with the polycarbonate, a charge transport agent or the like occurs, so that a problem mainly occurs in electrical properties. Further, in the method "2", when the molecular weight of the copolymerized polycarbonate is increased, the degree of freedom of molecules is lowered, the siloxane portion appears on the surface less efficiently, and satisfactory surface characteristics cannot be obtained. In addition, when the siloxane portion enters inside, electrical properties and printing resistance are adversely affected. In the method "3", the degree of freedom of the siloxane portion is high and the siloxane portion is liable to be exposed at the surface as compared with the method "2", so that surface slipperiness improves without impairing other properties. However, the method "3" does not give a satisfactory result with respect to abrasion resistance.

Thus, it is the current situation that although introduction of siloxane improves surface slipperiness, it has not yet given a satisfactory result with respect to abrasion resistance.
(Patent Literature 1) Japanese Patent Laid-Open Publication No. 61-219049
(Patent Literature 2) Japanese Patent Laid-Open Publication No. 62-205357
(Patent Literature 3) Japanese Patent Laid-Open Publication No. 61-132954
(Patent Literature 4) Japanese Patent Laid-Open Publication No. 2-240655
(Patent Literature 5) Japanese Patent Laid-Open Publication No. 5-72753
(Patent Literature 6) Japanese Patent Laid-Open Publication No. 6-136108
(Patent Literature 7) Japanese Patent Laid-Open Publication No. 7-261440
(Patent Literature 8) Japanese Patent Laid-Open Publication No. 2000-171989
(Patent Literature 9) Japanese Patent No. 2509025
(Patent Literature 10) Japanese Patent No. 3339598
(Patent Literature 11) Japanese Patent No. 3393616
(Patent Literature 12) Japanese Patent No. 3409819

### Disclosure of the Invention

An object of the present invention is to provide a polycarbonate having excellent surface slipperiness and abrasion resistance. The present inventor has found that a polycarbonate comprising a group having a siloxane structure and an aryl group at terminals in a specific ratio is excellent in both surface slipperiness and abrasion resistance and has completed the present invention based on this finding.

That is, the present invention includes a polycarbonate comprising a recurring unit represented by the following formula [1] and having, at terminals, a group (s) represented by the following formula (s) [4] and/or [2], the molar ratio ([4]/[2]) of the group represented by the formula [4] to the group represented by the formula [2] satisfying 0 < [4]/[2] < 150.

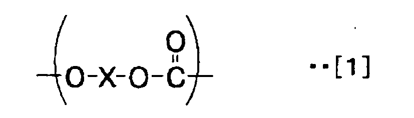

In the formula [1], X represents an aliphatic hydrocarbon group or aromatic hydrocarbon group.

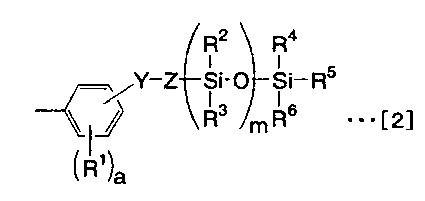

In the formula [2], Y represents a group selected from the class consisting of a single bond, O, CO, COO, NHCO, S, SO and SO₂.

Z represents a substituted or unsubstituted alkylene group having 1 to 6 carbon atoms.

R¹ represents a group selected from the class consisting of a hydrogen atom, halogen atom, alkyl group having 1 to 10 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 10 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group. When a plurality of R¹s exist, they may be the same or different.

R² and R³ each independently represent a group selected from the class consisting of an alkyl group having 1 to 10 carbon atoms, cycloalkyl group having 6 to 20 carbon atoms, alkenyl group having 2 to 10 carbon atoms, aryl group having 6 to 10 carbon atoms, aralkyl group having 7 to 20 carbon atoms and a group represented by the following formula [3]. When a plurality of R²s and R³s exist, they may be the same or different.

R⁴, R⁵ and R⁶ each independently represent a group selected from the class consisting of an alkyl group having 1 to 10 carbon atoms, cycloalkyl group having 6 to 20 carbon atoms, alkenyl group having 2 to 10 carbon atoms, aryl group having 6 to 10 carbon atoms and aralkyl group having 7 to 20 carbon atoms.
a is an integer of 1 to 4. m is an integer of 1 to 100.

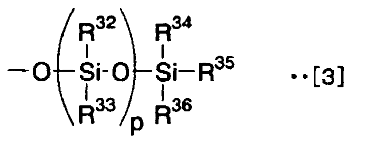

In the formula [3], R³², R³³, R³⁴, R³⁵ and R³⁶ each independently represent a group selected from the class consisting of an alkyl group having 1 to 10 carbon atoms, cycloalkyl group having 6 to 20 carbon atoms, alkenyl group having 2 to 10 carbon atoms, aryl group having 6 to 10 carbon atoms and aralkyl group having 7 to 20 carbon atoms.
p is an integer of 1 to 100.

**-Ar** **[4]**

In the formula [4], Ar represents at least one group selected from four formulas in the following group [5]. 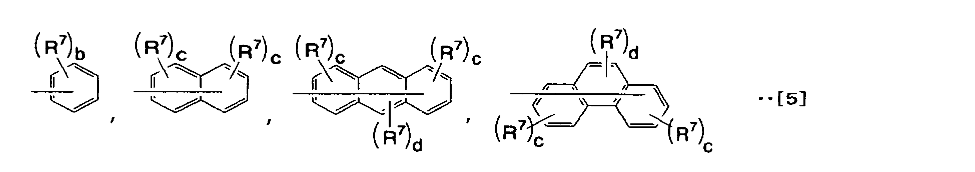 In the group [5], R⁷s each independently represent, among the four formulas and in each of the formulas, a substituted or unsubstituted aryl group having 6 to 20 carbon atoms. When a plurality of R⁷s exist, they may be the same or different. b is an integer of 1 to 5, c is an integer of 0 to 4, and d is an integer of 0 to 2. A straight line that crosses condensed aromatic rings represents a bonding hand, and the bonding hand may come out of any of the aromatic rings that it crosses.

Further, the present invention includes a method for producing a polycarbonate by reacting a dihydroxy compound, a carbonate precursor and a terminal blocking agent, wherein the terminal blocking agent comprises a compound (component A) having a group represented by the formula [2] and a compound (component B) having a group represented by the formula [4], and the molar ratio (component B/component A) of the component B to the component A satisfies 0 < component B/component A < 150.

In addition, the present invention includes a molded article comprising the polycarbonate.

### Brief Description of the Drawings

Fig. 1 is a top view of the shape of boss molded articles for evaluating weld self-tap strength that were obtained in Example 6 and Comparative Examples 8 and 9.
Fig. 2 is a front view of the shape of the boss molded articles for evaluating weld self-tap strength that were obtained in Example 6 and Comparative Examples 8 and 9.

### Description of Symbols

- 1: body of boss molded article
- 2: base of boss molded article (circular)
- 3: gate (one site, thickness: 1.5 mm, width: 3.0 mm)
- 4: boss hole (chamfer C at inlet: 0.5)
- 5: boss portion (outer diameter draft taper: 2°)
- 6: width of lower portion of base (circular, 34 mm)
- 7: weld forming portion
- 8: outer diameter of boss (8 mm)
- 9: inner diameter of boss (3.5 mm)
- 10: thickness of base (2 mm)
- 11: length of boss and boss hole (10 mm)

### Best Mode for Carrying out the Invention

### (Main Chain)

The polycarbonate of the present invention contains a recurring unit represented by a formula [1] .

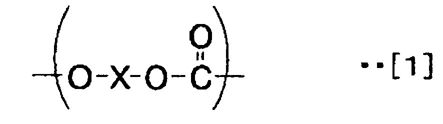

In the formula [1], X is a divalent aliphatic hydrocarbon group or aromatic hydrocarbon group. X is preferably a group represented by the following formula [6]. 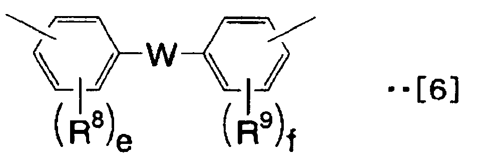 In the formula [6], R⁸ and R⁹ each independently represent a group selected from the class consisting of a hydrogen atom, halogen atom, alkyl group having 1 to 10 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 10 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group. When a plurality of R⁸s and R⁹s exist, they may be the same or different.

Illustrative examples of the halogen atom include a fluorine atom, chlorine atom and bromine atom. Illustrative examples of the alkyl group having 1 to 10 carbon atoms include methyl, ethyl, n-propyl, isopropyl, n-butyl, i-butyl, sec-butyl, n-hexyl, octyl and decyl groups. Illustrative examples of the alkoxy group having 1 to 10 carbon atoms include methoxy, ethoxy, propoxy, butoxy, hexyloxy, octyloxy and decyloxy groups. Illustrative examples of the cycloalkyl group having 6 to 20 carbon atoms include cyclohexyl, cycloheptyl and cyclooctyl groups. Illustrative examples of the cycloalkoxy group having 6 to 20 carbon atoms include cyclohexyloxy, cycloheptyloxy and cyclooctyloxy groups. Illustrative examples of the alkenyl group having 2 to 10 carbon atoms include ethenyl, propenyl, butenyl and hexenyl groups. Illustrative examples of the aryl group having 6 to 10 carbon atoms include phenyl, toluyl, dimethylphenyl and naphthyl groups. Illustrative examples of the aryloxy group having 6 to 10 carbon atoms include phenyloxy, toluyloxy, dimethylphenyloxy and naphthyloxy groups. Illustrative examples of the aralkyl group having 7 to 20 carbon atoms include benzyl, phenethyl and methylbenzyl groups. Illustrative examples of the aralkyloxy group having 7 to 20 carbon atoms include benzyloxy, phenethyloxy and methylbenzyloxy groups.

e and f are each independently an integer of 1 to 4.

W is a single bond or at least one group selected from the following group [7].

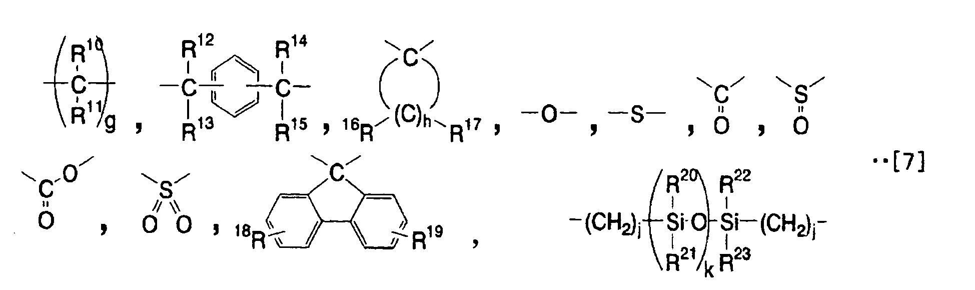

In the group [7], R¹⁰, R¹¹, R¹², R¹³, R¹⁴, R¹⁵, R¹⁶ and R¹⁷ each independently represent a group selected from the class consisting of a hydrogen atom, alkyl group having 1 to 10 carbon atoms, aryl group having 6 to 10 carbon atoms and aralkyl group having 7 to 20 carbon atoms. When a plurality of these exist, they may be the same or different.

Illustrative examples of the alkyl group having 1 to 10 carbon atoms include methyl, ethyl, n-propyl, isopropyl, n-butyl, i-butyl, sec-butyl, n-hexyl, octyl and decyl groups. Illustrative examples of the aryl group having 6 to 10 carbon atoms include phenyl, toluyl, dimethylphenyl and naphthyl groups. Illustrative examples of the aralkyl group having 7 to 20 carbon atoms include benzyl, phenethyl and methylbenzyl groups.

R¹⁸ and R¹⁹ each independently represent a group selected from the class consisting of a hydrogen atom, halogen atom, alkyl group having 1 to 10 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 10 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group.

Illustrative examples of the halogen atom include a fluorine atom, chlorine atom and bromine atom. Illustrative examples of the alkyl group having 1 to 10 carbon atoms include methyl, ethyl, n-propyl, isopropyl, n-butyl, i-butyl, sec-butyl, n-hexyl, octyl and decyl groups. Illustrative examples of the alkoxy group having 1 to 10 carbon atoms include methoxy, ethoxy, propoxy, butoxy, hexyloxy, octyloxy and decyloxy groups. Illustrative examples of the cycloalkyl group having 6 to 20 carbon atoms include cyclohexyl, cycloheptyl and cyclooctyl groups. Illustrative examples of the cycloalkoxy group having 6 to 20 carbon atoms include cyclohexyloxy, cycloheptyloxy and cyclooctyloxy groups. Illustrative examples of the alkenyl group having 2 to 10 carbon atoms include ethenyl, propenyl, butenyl and hexenyl groups. Illustrative examples of the aryl group having 6 to 10 carbon atoms include phenyl, toluyl, dimethylphenyl and naphthyl groups. Illustrative examples of the aryloxy group having 6 to 10 carbon atoms include phenyloxy, toluyloxy, dimethylphenyloxy and naphthyloxy groups. Illustrative examples of the aralkyl group having 7 to 20 carbon atoms include benzyl, phenethyl and methylbenzyl groups. Illustrative examples of the aralkyloxy group having 7 to 20 carbon atoms include benzyloxy, phenethyloxy and methylbenzyloxy groups.

R²⁰, R²¹, R²² and R²³ each independently represent a group selected from the class consisting of an alkyl group having 1 to 10 carbon atoms, cycloalkyl group having 6 to 20 carbon atoms, alkenyl group having 2 to 10 carbon atoms, aryl group having 6 to 10 carbon atoms and aralkyl group having 7 to 20 carbon atoms. When a plurality of these exist, they may be the same or different.

Illustrative examples of the alkyl group having 1 to 10 carbon atoms include methyl, ethyl, n-propyl, isopropyl, n-butyl, i-butyl, sec-butyl, n-hexyl, octyl and decyl groups. Illustrative examples of the cycloalkyl group having 6 to 20 carbon atoms include cyclohexyl, cycloheptyl and cyclooctyl groups. Illustrative examples of the alkenyl group having 2 to 10 carbon atoms include ethenyl, propenyl, butenyl and hexenyl groups. Illustrative examples of the aryl group having 6 to 10 carbon atoms include phenyl, toluyl, dimethylphenyl and naphthyl groups. Illustrative examples of the aralkyl group having 7 to 20 carbon atoms include benzyl, phenethyl and methylbenzyl groups.

g is an integer of 1 to 10, h is an integer of 4 to 7, j is an integer of 1 to 3, and k is an integer of 1 to 100.

In the formula [1], X is preferably at least one selected from groups represented by the following formulas.

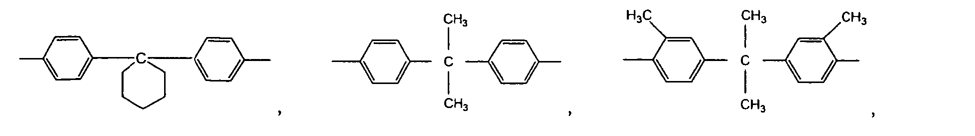

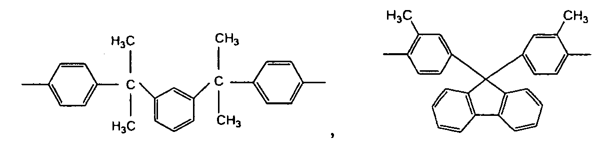

In the polycarbonate of the present invention, X may be a homopolymer or a copolymer of two or more. The content of the recurring unit represented by [1] which is an essential component constituting the polycarbonate of the present invention is preferably 80 to 100 mol%, more preferably 90 to 100 mol%, much more preferably 95 to 100 mol%. Other components are recurring units in which X is different from that in the essential component which is the recurring unit represented by [1].

The recurring unit represented by the formula [1] is formed from a dihydroxy compound to be described later.

### (Group Represented by Formula [2])

The polycarbonate of the present invention has a group represented by the following formula [2] at a terminal.

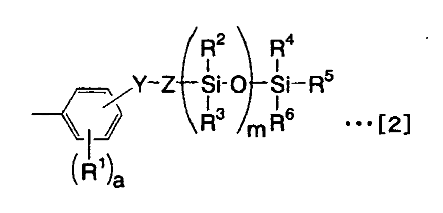

In the group represented by the formula [2], Y represents a group selected from the class consisting of a single bond, O, CO, COO, NHCO, S, SO and SO₂. Y is preferably a single bond, O or COO, more preferably a single bond.

Z represents a substituted or unsubstituted alkylene group having 1 to 6 carbon atoms. Z is preferably a substituted or unsubstituted alkylene group having 2 or 3 carbon atoms, more preferably an unsubstituted alkylene group having 2 or 3 carbon atoms. Illustrative examples of the alkylene group include methylene, ethylene, propylene, butylene, pentylene and hexylene groups. Illustrative examples of the substituent include an alkyl group having 1 to 3 carbon atoms such as methyl, ethyl and propyl groups.

R¹ represents a group selected from the class consisting of a hydrogen atom, halogen atom, alkyl group having 1 to 10 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 10 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group. R¹ is preferably a group selected from the class consisting of a hydrogen atom, alkyl group having 1 to 10 carbon atoms, cycloalkyl group having 6 to 20 carbon atoms and aryl group having 6 to 10 carbon atoms. R¹ is more preferably a group selected from the class consisting of a hydrogen atom, alkyl group having 1 to 3 carbon atoms and aryl group having 6 to 10 carbon atoms.

Illustrative examples of the halogen atom include a fluorine atom, chlorine atom and bromine atom. Illustrative examples of the alkyl group having 1 to 10 carbon atoms include methyl, ethyl, n-propyl, isopropyl, n-butyl, i-butyl, sec-butyl, n-hexyl, octyl and decyl groups. Illustrative examples of the alkoxy group having 1 to 10 carbon atoms include methoxy, ethoxy, propoxy, butoxy, hexyloxy, octyloxy and decyloxy groups. Illustrative examples of the cycloalkyl group having 6 to 20 carbon atoms include cyclohexyl, cycloheptyl and cyclooctyl groups. Illustrative examples of the cycloalkoxy group having 6 to 20 carbon atoms include cyclohexyloxy, cycloheptyloxy and cyclooctyloxy groups. Illustrative examples of the alkenyl group having 2 to 10 carbon atoms include ethenyl, propenyl, butenyl and hexenyl groups. Illustrative examples of the aryl group having 6 to 10 carbon atoms include phenyl, toluyl, dimethylphenyl and naphthyl groups. Illustrative examples of the aryloxy group having 6 to 10 carbon atoms include phenyloxy, toluyloxy, dimethylphenyloxy and naphthyloxy groups. Illustrative examples of the aralkyl group having 7 to 20 carbon atoms include benzyl, phenethyl and methylbenzyl groups. Illustrative examples of the aralkyloxy group having 7 to 20 carbon atoms include benzyloxy, phenethyloxy and methylbenzyloxy groups.

R² and R³ each independently represent a group selected from the class consisting of an alkyl group having 1 to 10 carbon atoms, cycloalkyl group having 6 to 20 carbon atoms, alkenyl group having 2 to 10 carbon atoms, aryl group having 6 to 10 carbon atoms, aralkyl group having 7 to 20 carbon atoms and a group represented by the following formula [3]. When a plurality of R²s and a plurality of R³s exist, they may be the same or different. R² and R³ are preferably a group selected from the class consisting of an alkyl group having 1 to 10 carbon atoms and aryl group having 6 to 10 carbon atoms.

Illustrative examples of the alkyl group having 1 to 10 carbon atoms include methyl, ethyl, n-propyl, isopropyl, n-butyl, i-butyl, sec-butyl, n-hexyl, octyl and decyl groups. Illustrative examples of the cycloalkyl group having 6 to 20 carbon atoms include cyclohexyloxy, cycloheptyloxy and cyclooctyloxy groups. Illustrative examples of the alkenyl group having 2 to 10 carbon atoms include ethenyl, propenyl, butenyl and hexenyl groups. Illustrative examples of the aryl group having 6 to 10 carbon atoms include phenyl, toluyl, dimethylphenyl and naphthyl groups. Illustrative examples of the aralkyl group having 7 to 20 carbon atoms include benzyl, phenethyl and methylbenzyl groups.

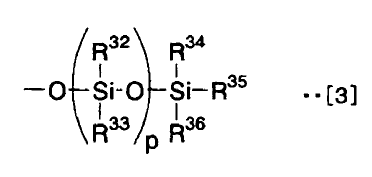

In the formula [3], R³², R³³, R³⁴, R³⁵ and R³⁶ each independently represent a group selected from the class consisting of an alkyl group having 1 to 10 carbon atoms, cycloalkyl group having 6 to 20 carbon atoms, alkenyl group having 2 to 10 carbon atoms, aryl group having 6 to 10 carbon atoms and aralkyl group having 7 to 20 carbon atoms. p is an integer of 1 to 100.

Illustrative examples of the alkyl group having 1 to 10 carbon atoms include methyl, ethyl, n-propyl, isopropyl, n-butyl, i-butyl, sec-butyl, n-hexyl, octyl and decyl groups. Illustrative examples of the cycloalkyl group having 6 to 20 carbon atoms include cyclohexyloxy, cycloheptyloxy and cyclooctyloxy groups. Illustrative examples of the alkenyl group having 2 to 10 carbon atoms include ethenyl, propenyl, butenyl and hexenyl groups. Illustrative examples of the aryl group having 6 to 10 carbon atoms include phenyl, toluyl, dimethylphenyl and naphthyl groups. Illustrative examples of the aralkyl group having 7 to 20 carbon atoms include benzyl, phenethyl and methylbenzyl groups.

R⁴, R⁵ and R⁶ each independently represent a group selected from the class consisting of an alkyl group having 1 to 10 carbon atoms, cycloalkyl group having 6 to 20 carbon atoms, alkenyl group having 2 to 10 carbon atoms, aryl group having 6 to 10 carbon atoms and aralkyl group having 7 to 20 carbon atoms. R⁴, R⁵ and R⁶ are preferably a group selected from the class consisting of an alkyl group having 1 to 10 carbon atoms and aryl group having 6 to 10 carbon atoms.

Illustrative examples of the alkyl group having 1 to 10 carbon atoms include methyl, ethyl, n-propyl, isopropyl, n-butyl, i-butyl, sec-butyl, n-hexyl, octyl and decyl groups. Illustrative examples of the cycloalkyl group having 6 to 20 carbon atoms include cyclohexyloxy, cycloheptyloxy and cyclooctyloxy groups. Illustrative examples of the alkenyl group having 2 to 10 carbon atoms include ethenyl, propenyl, butenyl and hexenyl groups. Illustrative examples of the aryl group having 6 to 10 carbon atoms include phenyl, toluyl, dimethylphenyl and naphthyl groups. Illustrative examples of the aralkyl group having 7 to 20 carbon atoms include benzyl, phenethyl and methylbenzyl groups.

a is an integer of 1 to 4.

m is an integer of 1 to 100. m is preferably an integer of 5 to 80, more preferably an integer of 8 to 40. When m is too small, an effect of improving surface slipperiness is not satisfactory, while when m is too large, transparency and electric properties are adversely affected disadvantageously.

The group represented by the formula [2] is preferably such that Y is a single bond, Z is an ethylene group or trimethylene group, m is an integer of 5 to 10, R⁴ and R⁶ are a methyl group, R⁵ is a methyl group or tetramethylene group and a is a hydrogen atom, methyl group or phenyl group.

The group represented by the formula [2] can be introduced by using a monohydric phenol as a terminal blocking agent. Specific examples of the monohydric phenol include compounds represented by formulas [2] -1 to [2]-24 to be described later.

### (Group Represented by Formula [4])

The polycarbonate of the present invention has a group represented by the following formula [4] at a terminal.

**-Ar** **[4]**

In the formula [4], Ar is at least one group selected from four formulas in the following group [5].

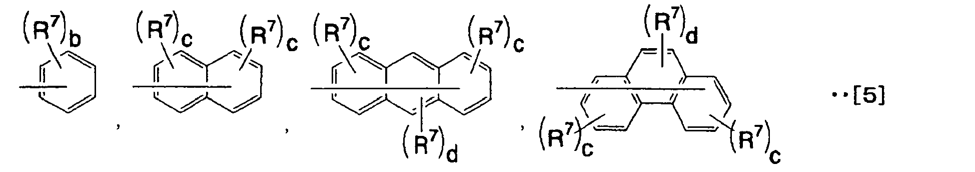

In the group [5], R⁷s each independently represent, among the four formulas and in each of the formulas, a substituted or unsubstituted aryl group having 6 to 20 carbon atoms. When a plurality of R⁷s exist, they may be the same or different. R⁷ is preferably a substituted or unsubstituted aryl group having 6 to 10 carbon atoms, more preferably an unsubstituted aryl group having 6 to 10 carbon atoms. Illustrative examples of the aryl group include phenyl, tolyl, dimethylphenyl, biphenylyl, naphthyl, anthryl and phenanthryl groups. Illustrative examples of the substituent include an alkyl group having 1 to 5 carbon atoms such as methyl, ethyl and propyl groups, and a halogen atom such as fluorine, chlorine and bromine atoms.

b is an integer of 1 to 5, preferably an integer of 1 to 3, more preferably an integer of 1 or 2. c is an integer of 0 to 4, preferably an integer of 0 to 2, more preferably an integer of 0 or 1. d is an integer of 0 to 2, preferably an integer of 0 or 1.

In the four formulas in the group [5], a straight line that crosses condensed aromatic rings represents a bonding hand, and the bonding hand may come out of any of the aromatic rings that it crosses.

As the group represented by the formula [4], 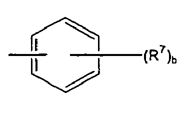 (R⁷ is a phenyl group, and b is 1 or 2), or 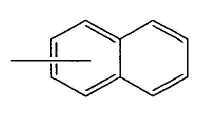 is preferred. More specifically, groups represented by the following formulas are named.

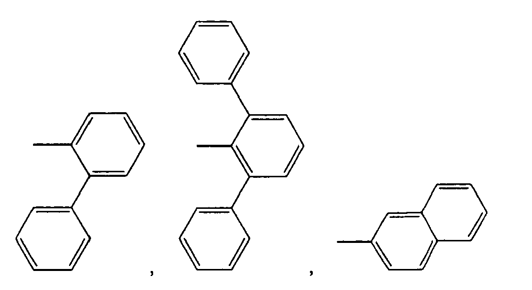

The group represented by the formula [4] can be introduced by using a monohydric phenol as a terminal blocking agent. Specific examples of the monohydric phenol include compounds represented by formulas [4] -1 to [4]-26 to be described later.

In the polycarbonate of the present invention, the molar ratio ([4]/[2]) of the group represented by the formula [4] to the group represented by the formula [2] satisfies 0 < [4]/[2] < 150. The molar ratio preferably satisfies 0.5 < [4] / [2] < 90, more preferably satisfies 1 < [4]/[2] < 70. When the value of [4]/[2] exceeds 150, the amount of the siloxane portion becomes too small, so that the effect of surface slipperiness becomes unsatisfactory.

The specific viscosity of the polycarbonate of the present invention is preferably 0.2 to 1.5, more preferably 0.3 to 1.3, much more preferably 0.6 to 1.1. The specific viscosity is measured at 20°C with 0.7 g of the polycarbonate dissolved in 100 ml of methylene chloride. When the specific viscosity is lower than 0.2, the mechanical strength of the resin deteriorates. Meanwhile, when the specific viscosity exceeds 1.5, the mechanical strength of the resin improves, but the number of terminals of the polymer chain decreases, so that an effect of improving surface slipperiness and abrasion resistance by terminal modification becomes unsatisfactory. In addition, when it is used as an electrophotographic binder resin, it is difficult to coat it to an appropriate film thickness.

A film prepared by use of the polycarbonate of the present invention preferably has a contact angle of not smaller than 95°, more preferably not smaller than 98°, much more preferably not smaller than 100°.

Further, the film prepared by use of the polycarbonate of the present invention preferably has a static friction coefficient of not higher than 0.36, more preferably not higher than 0.33, much more preferably not higher than 0.30. In addition, the film prepared by use of the polycarbonate of the present invention preferably has a dynamic friction coefficient of not higher than 0.26, more preferably not higher than 0.23, much more preferably not higher than 0.20.

Furthermore, the film prepared by use of the polycarbonate of the present invention preferably has a taper abrasion amount of not larger than 10.5 mg, more preferably not larger than 10.2 mg, much more preferably not larger than 10.0 mg.

### (Production Method of Polycarbonate)

The polycarbonate of the present invention can be produced by reacting a dihydroxy compound, a carbonate precursor and a terminal blocking agent. In the present invention, the terminal blocking agent uses a compound (component A) having a group represented by the formula [2] and a compound (component B) having a group represented by the formula [4], and the molar ratio of the component B to the component A satisfies 0 < component B/component A < 150. The molar ratio of the component B to the component A preferably satisfies 0.5 < component B/component A < 90, more preferably satisfies 1 < component B/component A < 70.

### (Terminal Blocking Agent)

The terminal blocking agent comprises a compound (component A) having a group represented by the formula [2] and a compound (component B) having a group represented by the formula [4].

Illustrative examples of the compound (component A) having a group represented by the formula [2] include monohydric phenols represented by the following formulas.

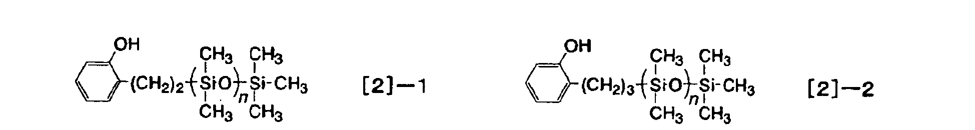

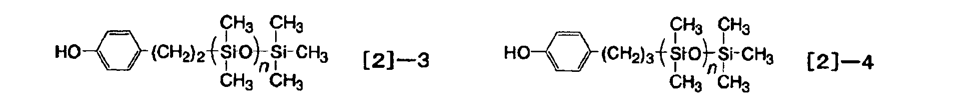

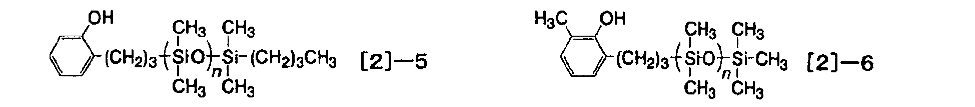

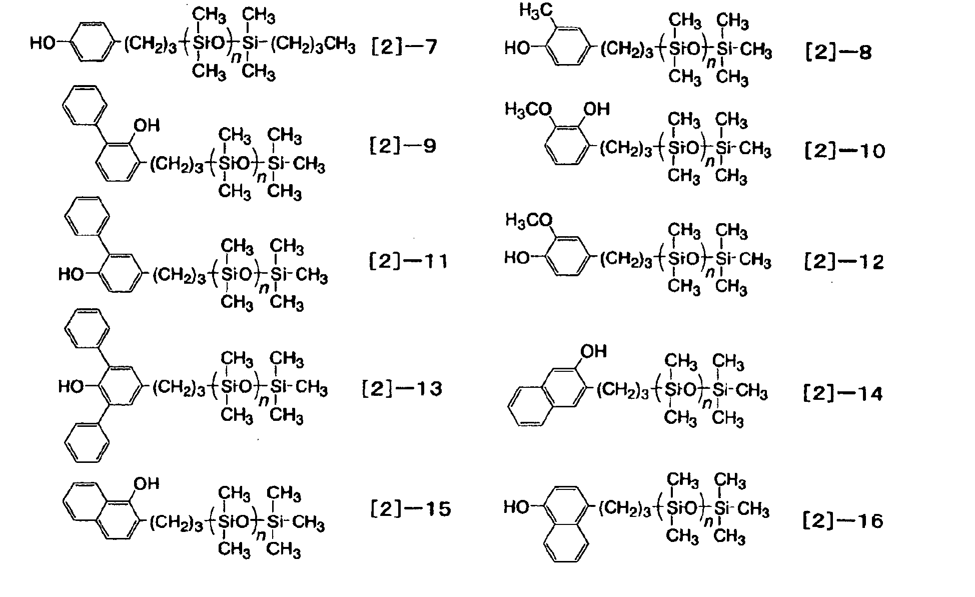

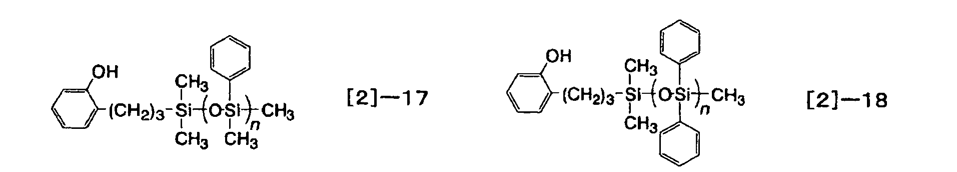

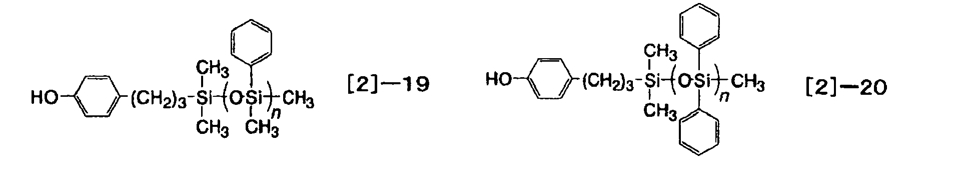

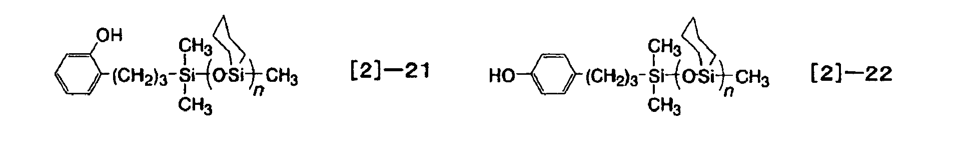

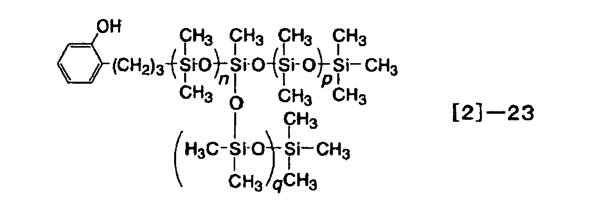

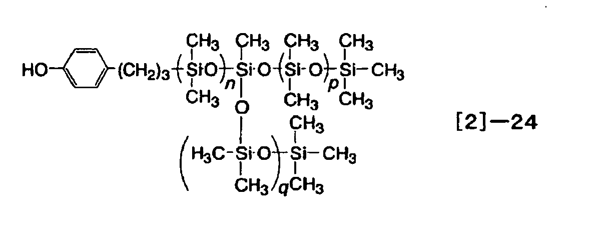

In the formulas [2] -1 to [2] -24, n, p and q each are an integer of 1 to 100 and satisfy 1 ≤ n + p + q ≤ 100.

Illustrative examples of the compound having a group represented by the formula [4] include monohydric phenols represented by the following formulas.

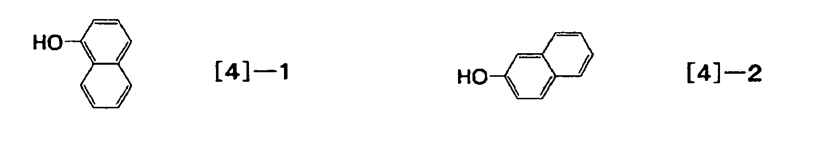

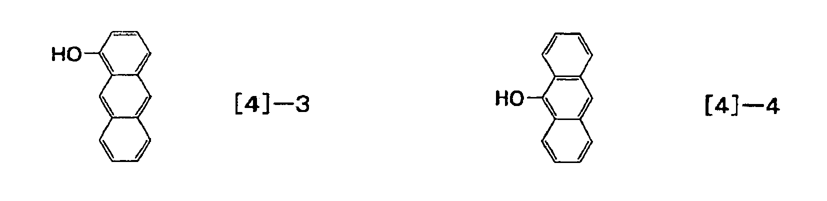

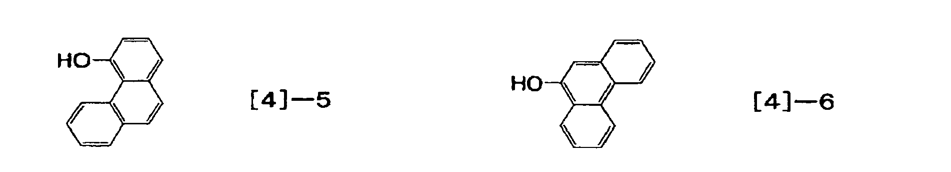

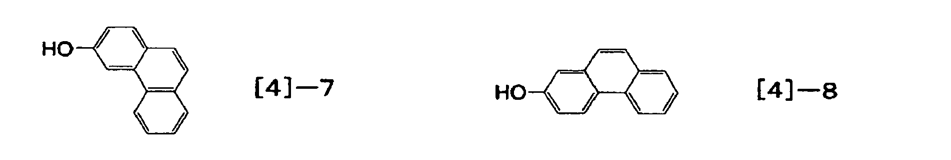

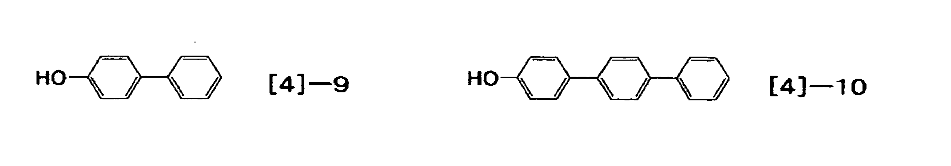

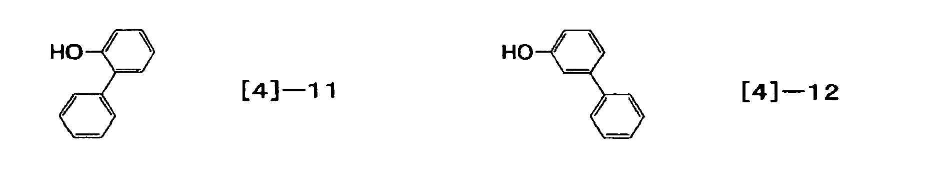

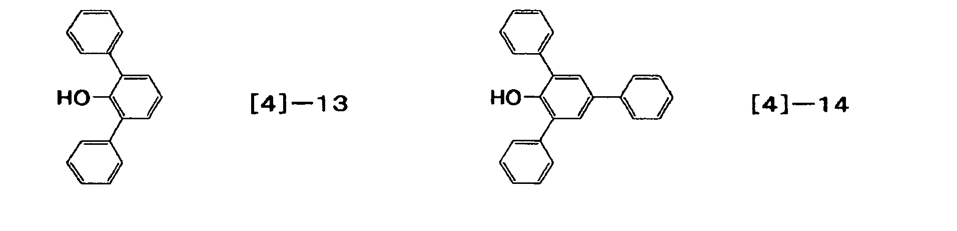

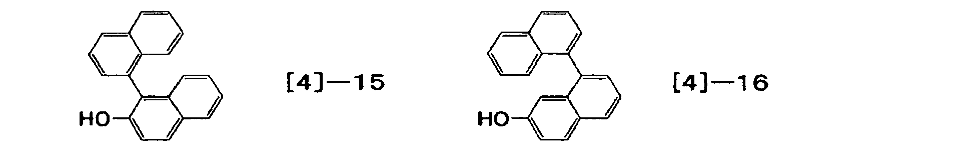

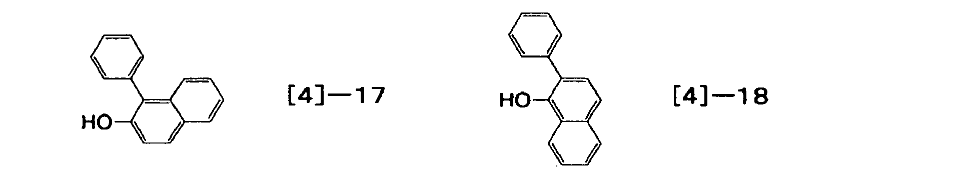

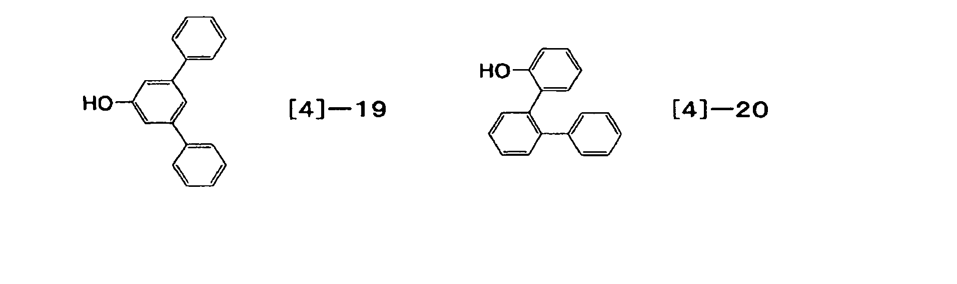

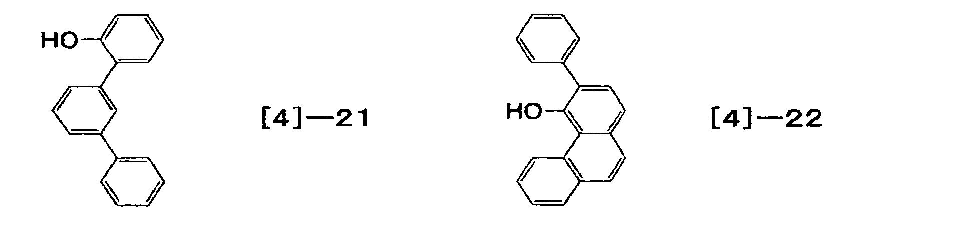

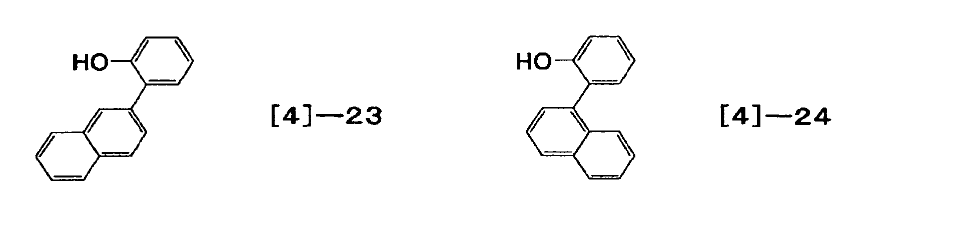

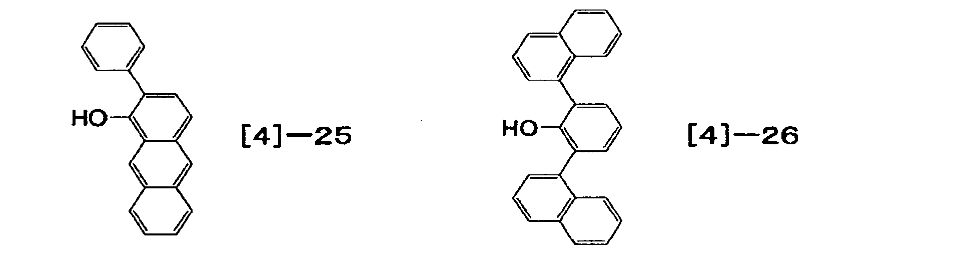

### (Dihydroxy Compound)

The dihydroxy compound is preferably a compound represented by the following formula [8].

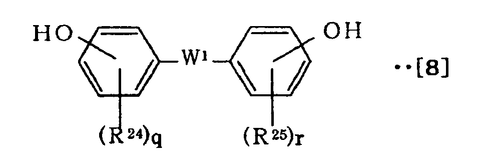

In the formula [8], R²⁴ and R²⁵ each independently represent a group selected from the class consisting of a hydrogen atom, halogen atom, alkyl group having 1 to 10 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 10 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group. When a plurality of R²⁴s and R²⁵s exist, they may be the same or different.

Illustrative examples of the halogen atom include a fluorine atom, chlorine atom and bromine atom. Illustrative examples of the alkyl group having 1 to 10 carbon atoms include methyl, ethyl, n-propyl, isopropyl, n-butyl, i-butyl, sec-butyl, n-hexyl, octyl and decyl groups. Illustrative examples of the alkoxy group having 1 to 10 carbon atoms include methoxy, ethoxy, propoxy, butoxy, hexyloxy, octyloxy and decyloxy groups. Illustrative examples of the cycloalkyl group having 6 to 20 carbon atoms include cyclohexyl, cycloheptyl and cyclooctyl groups. Illustrative examples of the cycloalkoxy group having 6 to 20 carbon atoms include cyclohexyloxy, cycloheptyloxy and cyclooctyloxy groups. Illustrative examples of the alkenyl group having 2 to 10 carbon atoms include ethenyl, propenyl, butenyl and hexenyl groups. Illustrative examples of the aryl group having 6 to 10 carbon atoms include phenyl, toluyl, dimethylphenyl and naphthyl groups. Illustrative examples of the aryloxy group having 6 to 10 carbon atoms include phenyloxy, toluyloxy, dimethylphenyloxy and naphthyloxy groups. Illustrative examples of the aralkyl group having 7 to 20 carbon atoms include benzyl, phenethyl and methylbenzyl groups. Illustrative examples of the aralkyloxy group having 7 to 20 carbon atoms include benzyloxy, phenethyloxy and methylbenzyloxy groups.

q and r are each independently an integer of 1 to 4. W¹ is a single bond or at least one group selected from the group [7].

Illustrative examples of the dihydroxy compound represented by the formula [8] include
4,4'-dihydroxybiphenyl, bis(4-hydroxyphenyl)methane,
1,1-bis(4-hydroxyphenyl)ethane,
1,1-bis(4-hydroxyphenyl)-1-phenylethane,
2,2-bis(4-hydroxyphenyl)propane,
2,2-bis(4-hydroxy-3-methylphenyl)propane,
1,1-bis(4-hydroxyphenyl)-3,3,5-trimethylcyclohexane,
2,2-bis(4-hydroxy-3,3'-biphenyl)propane,
2,2-bis(4-hydroxy-3-isopropylphenyl)propane,
2,2-bis(3-t-butyl-4-hydroxyphenyl)propane,
2,2-bis(4-hydroxyphenyl)butane,
2,2-bis(4-hydroxyphenyl)octane,
2,2-bis(3-bromo-4-hydroxyphenyl)propane,
2,2-bis(3,5-dimethyl-4-hydroxyphenyl)propane,
2,2-bis(3-cyclohexyl-4-hydroxyphenyl)propane,
1,1-bis(3-cyclohexyl-4-hydroxyphenyl)cyclohexane,
bis(4-hydroxyphenyl)diphenylmethane,
9,9-bis(4-hydroxyphenyl)fluorene,
9,9-bis(4-hydroxy-3-methylphenyl)fluorene,
1,1-bis(4-hydroxyphenyl)cyclohexane,
1,1-bis(4-hydroxyphenyl)cyclopentane,
4,4'-dihydroxydiphenyl ether,
4,4'-dihydroxy-3,3'-dimethyldiphenyl ether,
4,4'-sulfonyl diphenol, 4,4'-dihydroxydiphenyl sulfoxide, 4,4'-dihydroxydiphenyl sulfide,
2,2'-dimethyl-4,4'-sulfonyl diphenol,
4,4'-dihydroxy-3,3'-dimethyldiphenyl sulfoxide,
4,4'-dihydroxy-3,3'-dimethyldiphenyl sulfide,
2,2'-diphenyl-4.,4'-sulfonyl diphenol,
4,4'-dihydroxy-3,3'-diphenyldiphenyl sulfoxide,
4,4'-dihydroxy-3,3'-diphenyldiphenyl sulfide,
1,3-bis{2-(4-hydroxyphenyl)propyl}benzene,
1,4-bis{2-(4-hydroxyphenyl)propyl}benzene,
1,4-bis(4-hydroxyphenyl)cyclohexane,
1,3-bis(4-hydroxyphenyl)cyclohexane,
4,8-bis(4-hydroxyphenyl)tricyclo[5.2.1.0^{2,6}]decane,
4,4'-(1,3-adamantane-di-yl)diphenol, and
1,3-bis(4-hydroxyphenyl)-5,7-dimethyl adamantane. Of these,
1,1-bis(4-hydroxyphenyl)-1-phenylethane,
2,2-bis(4-hydroxyphenyl)propane,
2,2-bis(4-hydroxy-3-methylphenyl)propane,
1,1-bis(4-hydroxyphenyl)cyclohexane,
1,1-bis(4-hydroxyphenyl)-3,3,5-trimethylcyclohexane,
4,4'-sulfonyl diphenol, 2,2'-dimethyl-4,4'-sulfonyl diphenol, 9,9-bis(4-hydroxy-3-methylphenyl)fluorene,
1,3-bis{2-(4-hydroxyphenyl)propyl}benzene and
1,4-bis{2-(4-hydroxyphenyl)propyl}benzene are preferred, and 2,2-bis(4-hydroxyphenyl)propane (BPA),
1,1-bis(4-hydroxyphenyl)cyclohexane (BPZ),
4,4'-sulfonyl diphenol and
9,9-bis(4-hydroxy-3-methylphenyl)fluorene are particularly preferred. Further, these may be used alone or in combination of two or more.

### (Carbonate Precursor)

Illustrative examples of the carbonate precursor include phosgene and diester carbonate. A reaction using, for example, phosgene as the carbonate precursor is generally carried out in the presence of an acid binding agent and a solvent. The proportion of the carbonate precursor used can be adjusted as appropriate in consideration of stoichiometric proportion (equivalent) of the reaction. As the acid binding agent, an alkali metal hydroxide such as sodium hydroxide or potassium hydroxide or an amine compound such as pyridine is used, for example. The proportion of the acid binding agent used can also be adjusted as appropriate in consideration of stoichiometric proportion (equivalent) of the reaction. More specifically, the acid binding agent is preferably used in a proportion of 2 equivalent or a proportion which is slightly over 2 equivalent per mole of the dioxy compound used.

As the solvent, a halogenated hydrocarbon such as methylene chloride or chlorobenzene is used. An interfacial polycondensation reaction may be carried out by using two solvents that are mutually immiscible.

To accelerate the reaction, a catalyst such as a tertiary amine or quaternary ammonium salt can be used. Further, as desired, an antioxidant such as sodium sulfite or hydrosulfite may be added in a small amount.

The reaction is generally carried out within a temperature range of 0 to 150°C, preferably 5 to 40°C. The reaction may be carried out under reduced pressure, normal pressure or increased pressure. However, in general, the reaction can be suitably carried out under normal pressure or the pressure of the reaction system itself. The reaction time depends on the reaction temperature and the like and is generally about 0.5 minutes to 10 hours, preferably 1 minute to 3 hours.

As a method of carrying out the polycondensation reaction, any method such as
(1) a method of allowing the dihydroxy compound and a monohydric phenol as the terminal blocking agent to coexist from the beginning and using the carbonate precursor to achieve a high molecular weight,
(2) a method of reacting the dihydroxy compound with the carbonate precursor to produce an oligomer and adding a monohydric phenol as the terminal blocking agent to promote a high molecular weight and complete polycondensation, or
(3) a method of reacting the dihydroxy compound, the terminal blocking agent having the structure of the formula [4] and the carbonate precursor to produce an oligomer and adding the terminal blocking agent having the structure of the formula [2] to complete polycondensation,
can be employed.

Further, the polycarbonate of the present invention may have other recurring units and terminal groups as long as the objects of the present invention are not inhibited.

The polycarbonate of the present invention may be a polyester carbonate that is copolymerized with an aromatic dicarboxylic acid, e.g. terephthalic acid, isophthalic acid, naphthalenedicarboxylic acid or a derivative thereof in such an amount that does not impair the effect of the present invention. Further, the present polycarbonate may be a branched polycarbonate copolymerized with a small amount of trifunctional compound. Further, the polycarbonate of the present invention may also contain additives such as a light stabilizer, colorant, antistatic agent, lubricant and filler, other polycarbonate resins and other thermoplastic resins in such a small amount that does not impair the objects of the present invention.

More specifically, the following (i) phosphorus thermal stabilizers, (ii) antioxidants, (iii) flame retardants and (iv) dripping inhibitors can be added as desired.

### (i) Phosphorus Thermal Stabilizers

Various phosphorus thermal stabilizers are preferably added, primarily for the purpose of improving the thermal stability during molding of the polycarbonate of the present invention. Illustrative examples of the phosphorus thermal stabilizers include phosphorous acid, phosphoric acid, phosphonous acid, phosphonic acid and their esters, and tertiary phosphine. The phosphorus thermal stabilizers may be used alone or in admixture of two or more.

More specifically, illustrative examples of phosphite compounds include trialkyl phosphite such as tridecyl phosphite, dialkyl monoaryl phosphite such as didecyl monophenyl phosphite, monoalkyl diaryl phosphite such as monobutyl diphenyl phosphite, triaryl phosphite such as triphenyl phosphite and tris(2,4-di-tert-butylphenyl)phosphite, pentaerythritol phosphite such as distearyl pentaerythritol diphosphite, bis(2,4-di-tert-butylphenyl)pentaerythritol diphosphite, bis(2,4-dicumylphenyl)pentaerythritol diphosphite and bis(2,6-di-tert-butyl-4-methylphenyl)pentaerythrito 1 diphosphite, and cyclic phosphite such as 2,2-methylenebis(4,6-di-tert-butylphenyl)octyl phosphite and 2,2'-methylenebis(4,6-di-tert-butylphenyl)(2,4-di-tert-butylphenyl)phosphite.

Illustrative examples of phosphate compounds include tributyl phosphate, trimethyl phosphate, tricresyl phosphate, triphenyl phosphate, triethyl phosphate, diphenylcresyl phosphate, diphenylmonoorthoxenyl phosphate, tributoxyethyl phosphate, and diisopropyl phosphate. Triphenyl phosphate and trimethyl phosphate are preferred.

Preferred examples of phosphonite compounds include tetrakis(di-tert-butylphenyl)-biphenylene diphosphonite and bis(di-tert-butylphenyl)-phenyl-phenyl phosphonite. Tetrakis(2,4-di-tert-butylphenyl)-biphenylene diphosphonite and bis(2,4-di-tert-butylphenyl)-phenyl-phenyl phosphonite are more preferred. The phosphonite compound can be used, and is preferably used, in combination with the above phosphite compound having an aryl group substituted with two or more alkyl groups.

Illustrative examples of phosphonate compound include dimethyl benzene phosphonate, diethyl benzene phosphonate, and dipropyl benzene phosphonate. Illustrative examples of tertiary phosphine include triphenyl phosphine.

The phosphorus thermal stabilizers are preferably added in an amount of 0.0001 to 1 part by weight, more preferably 0.0005 to 0.5 parts by weight, much more preferably 0.002 to 0.3 parts by weight, based on 100 parts by weight of the polycarbonate.

### (ii) Antioxidants

Antioxidants may be added, primarily for the purpose of improving the thermal stability and heat aging resistance during molding of the polycarbonate of the present invention. The antioxidants are suitably hindered phenol stabilizers. Illustrative examples of the hindered phenol stabilizers include octadecyl-3-(3,5-di-tert-butyl-4-hydroxyphenyl) propionate, 2-tert-butyl-6-(3'-tert-butyl-5'-methyl-2'-hydroxybenzyl)-4-methylphenyl acrylate, 4,4'-butylidene bis(3-methyl-6-tert-butylphenol), triethylene glycol-N-bis-3-(3-tert-butyl-4-hydroxy-5-methylphenyl) propionate, 3,9-bis{2-[3-(3-tert-butyl-4-hydroxy-5-methylphenyl)propionyloxy]-1,1-dimethylethyl}-2,4,8,10-tetraoxaspiro[5,5]undecane, N,N'-hexamethylene bis-(3,5-di-tert-butyl-4-hydroxyhydrocinnamide), 1,3,5-trimethyl-2,4,6-tris(3,5-di-tert-butyl-4-hydroxybenzyl)benzene, and tetrakis[methylene-3-(3,5-di-tert-butyl-4-hydroxyphenyl)propionate]methane. All of these are readily available. Of these, octadecyl-3-(3,5-di-t-butyl-4-hydroxyphenyl)propion ate is preferably used. The above hindered phenol antioxidants can be used alone or in combination of two or more. These antioxidants are preferably added in an amount of 0.0001 to 0.05 parts by weight based on 100 parts by weight of the polycarbonate.

### (iii) Flame Retardants

The polycarbonate of the present invention may contain various flame retardants. Illustrative examples of the flame retardants include the following flame retardants (a) to (c).
(a) Metal Salt Flame Retardant: Illustrative examples thereof include organosulfonic acid alkali (earth) metal salt, metallic borate flame retardant, and metallic stannate flame retardant. Specific examples thereof include potassium perfluorobutane sulfonate, potassium diphenyl sulfone-3-sulfonate, and dipotassium diphenyl sulfone-3,3'-disulfonate. The metal salt flame retardant is preferably contained in an amount of 0.02 to 0.3 parts by weight, more preferably 0.04 to 0.15 parts by weight, much more preferably 0.05 to 0.1 parts by weight, based on 100 parts by weight of the polycarbonate.
(b) Organophosphorus Flame Retardant
   Illustrative examples thereof include a monophosphate compound, phosphate oligomer compound, phosphonate oligomer compound, phosphonitrile oligomer compound, and amide phosphonate compound. The organophosphorus flame retardant is preferably contained in an amount of 1 to 20 parts by weight, more preferably 2 to 10 parts by weight, much more preferably 2 to 7 parts by weight, based on 100 parts by weight of the polycarbonate.
(c) Silicone Flame Retardant: Silicone compounds used as silicone flame retardants improve flame retardancy by a chemical reaction at the time of combustion. As the compounds, various compounds that have been proposed as flame retardants for aromatic polycarbonate resins can be used. More specifically, the compounds preferably contain at least one group selected from an alkoxy group and hydrogen (i.e. Si-H group) in a predetermined amount. The content of the group (alkoxy group, Si-H group) is preferably 0.1 to 1.2 mol/100 g, more preferably 0.12 to 1 mol/100 g, much more preferably 0.15 to 0.6 mol/100 g. The content can be determined by measuring the amount of hydrogen or alcohol produced per unit weight of the silicone compound by an alkali decomposition method. The alkoxy group is preferably an alkoxy group having 1 to 4 carbon atoms, particularly suitably a methoxy group. The silicone flame retardant is preferably contained in an amount of 0.1 to 10 parts by weight, more preferably 0.5 to 7 parts by weight, much more preferably 1 to 5 parts by weight, based on 100 parts by weight of the polycarbonate.

### (iv) Dripping Inhibitors

The polycarbonate of the present invention can contain a dripping inhibitor. By use of the dripping inhibitor in combination with the above flame retardant, better flame retardancy can be attained. An example of the dripping inhibitor is a fluorine-containing polymer capable of fibril formation. Illustrative examples of the polymer include polytetrafluoroethylene, tetrafluoroethylene copolymer (e.g. tetrafluoroethylene/hexafluoropropylene copolymer), partially fluorinated polymer as described in U.S. Patent No. 4379910, and polycarbonate resin produced from fluorinated diphenol. Polytetrafluoroethylene (hereinafter may be referred to as PTFE) is preferred. Illustrative examples of commercial products of fibrillation PTFE include Teflon® 6J and Teflon® 30J of DU PONT-MITSUI FLUOROCHEMICALS COMPANY, LTD., POLYFLON MPA FA500, F-201L, Fluon D-1 and Fluon D-2 of DAIKIN CHEMICAL INDUSTRIES, LTD. , Fluon AD-1 and Fluon AD-936 of ASAHI ICI FLUOROPOLYMERS CO., LTD., "METABLEN A3800" (trade name) of MITSUBISHI RAYON CO., LTD. and "BLENDEX B449" (trade name) of GE SPECIALTY CHEMICALS CO., LTD. The fibrillation PTFE is preferably contained in an amount of 0.001 to 1 part by weight, more preferably 0.1 to 0.7 parts by weight, based on 100 parts by weight of the polycarbonate.

### (Molded Article)

The present invention includes a molded article comprising the aforementioned polycarbonate. The molded article can be applied to parts of electronics products. Further, it is useful for housing of notebook-sized personal computer, camera, liquid crystal display television and the like.

### Examples

Hereinafter, the present invention will be further described with reference to Examples. Further, in the following Examples, "parts" indicates "parts by weight", and "%" indicates "% by weight". Evaluations were made in the following manners.

### (1) Contact Angle

A contact angle to pure water was measured by use of a drip-type contact angle meter of Kyowa Interface Science Co., Ltd.

### (2) Friction Coefficient

A friction coefficient was measured by use of a flatness measuring instrument (HEIDON type 14) of Shinto Scientific Co., Ltd. Further, a stainless ball indenter having a diameter of 10 mm was used, and the load was 200 gf, i.e. 1.96 N.

### (3) Abrasion Test

Abrasion was evaluated by use of a Taber abrasion tester of TOYO SEIKI CO. , LTD. As for test conditions, in a 50% RH atmosphere at 23°C, an abrasion amount after 2,000 rotations was determined, using an abrasion ring CS-17, under a load of 500 gf (including the abrasion ring' s own weight), i. e. 4.9N, by comparing the weights before and after the test.

### (4) Specific Viscosity (ηₛₚ)

The specific viscosity of polymer was measured at 20°C by dissolving the polymer in methylene chloride based on the aforementioned conditions.

### (5) Glass Transition Temperature (Tg)

This was measured by a 910 type DSC of Du Pont Co., Ltd.

### Example 1

To a reactor equipped with a thermometer, agitator and reflux condenser, 218,200 parts of ion exchange water and 34,990 parts of 25% sodium hydroxide solution were added, and 32,530 parts of 1,1-bis(4-hydroxyphenyl)cyclohexane (hereinafter may be abbreviated as "BP-Z") and 68 parts of hydrosulfite were dissolved therein. Then, 123,600 parts of methylene chloride was added, and 15,000 parts of phosgene was blown into the mixture at 22 to 30°C under agitation for 60 minutes.

After completion of phosgene injection, 5,000 parts of 25% sodium hydroxide solution, a solution prepared by dissolving 171.4 parts of compound represented by [2] -5 (n = 8 to 10) as a monohydric phenol having a structural formula represented by the formula [2] in 500 parts of methylene chloride and a solution prepared by dissolving 209.0 parts of compound represented by [4] -13 as a monohydric phenol having a structural formula represented by the formula [4] in 3,000 parts of methylene chloride were added to emulsify the mixture. Then, 40 parts of triethylamine was added and agitated at 28 to 33°C for 1 hour to complete the reaction. After completion of the reaction, the product was diluted with methylene chloride, rinsed with water, made acidic by hydrochloric acid and rinsed with water. When the conductivity of the aqueous phase became virtually the same as that of ion exchange water, the methylene chloride phase was concentrated and dehydrated to obtain a solution having a polycarbonate concentration of 20%.

The ratio of terminal constitutional units of polycarbonate obtained by removing the solvent from this solution was [4]/[2] = 7 in terms of molar ratio (polymer yield: 95%). Further, this polymer had a ηₛₚ of 1.013 dl/g and a Tg of 178°C. In addition, the content of polysiloxane in the polymer was 0.50% (feed rate: 0.48%).

A 20% methylene chloride solution was prepared from the obtained polycarbonate, and a 500-µm-thick cast film was prepared. After the solvent was removed at room temperature for 2 hours, 40°C for 3 hours and 60°C for 3 hours, the film was dried at 120°C for 24 hours to obtain a transparent film. Measurements of the contact angle and friction coefficient of the obtained film and a Taber abrasion test were conducted. The results are shown in Table 1.

### Example 2

A polycarbonate having a terminal constitutional unit ratio of [4]/[2] = 8.5 in terms of molar ratio was obtained (polymer yield: 97%) in the same manner as in Example 1 except that 175.4 parts of compound represented by [4] -11 was used as a monohydric phenol having a structural formula represented by the formula [4]. Further, this polymer had a ηₛₚ of 0.774 dl/g and a Tg of 176°C. In addition, the content of polysiloxane in the polymer was 0.52% (feed rate: 0.48%). A cast film was prepared from the obtained polycarbonate in the same manner as in Example 1, and measurements of the contact angle and friction coefficient of the obtained film and a Taber abrasion test were conducted. The results are shown in Table 1.

### Example 3

A polycarbonate having a terminal constitutional unit ratio of [4]/[2] = 8.5 in terms of molar ratio was obtained (polymer yield: 96%) in the same manner as in Example 1 except that 148.5 parts of compound represented by [4]-2 was used as a monohydric phenol having a structural formula represented by the formula [4]. Further, this polymer had a ηₛₚ of 0.852 dl/g and a Tg of 178°C. In addition, the content of polysiloxane in the polymer was 0.56% (feed rate: 0.48%). A cast film was prepared from the obtained polycarbonate in the same manner as in Example 1, and measurements of the contact angle and friction coefficient of the obtained film and a Taber abrasion test were conducted. The results are shown in Table 1.

### Comparative Example 1

A polycarbonate having a terminal constitutional unit ratio of [4]/[2] = 0 in terms of molar ratio was obtained (polymer yield: 94%) in the same manner as in Example 1 except that 1,713.9 parts of compound represented by [2]-5 (n = 8 to 10) was used as a monohydric phenol having a structural formula represented by the formula [2] and that a monohydric phenol having a structural formula represented by the formula [4] was not used. Further, this polymer had a ηₛₚ of 0.771 dl/g and a Tg of 175°C. In addition, the content of polysiloxane in the polymer was 5.4% (feed rate : 4.6%). A cast film was prepared from the obtained polycarbonate in the same manner as in Example 1, and measurements of contact angle and friction coefficient and a Taber abrasion test were conducted. The results are shown in Table 1.

### Comparative Example 2

A polycarbonate was obtained (polymer yield: 97%) in the same manner as in Example 1 except that 10.3 parts of compound represented by [2] -5 (n = 8 to 10) was used as a monohydric phenol having a structural formula represented by the formula [2] and that 194.8 parts of compound represented by [4] -11 was used as a monohydric phenol having a structural formula represented by the formula [4]. The obtained polycarbonate had a ηₛₚ of 0.777 dl/g and a Tg of 156°C. In addition, the content of polysiloxane in the polycarbonate was 0.03% (feed rate: 0.029%). A cast film was prepared from the obtained polycarbonate in the same manner as in Example 1, and measurements of contact angle and friction coefficient and a Taber abrasion test were conducted. The results are shown in Table 1.

### Comparative Example 3

A polycarbonate having a terminal constitutional unit ratio of [4]/[2] = 0 in terms of molar ratio was obtained (polymer yield: 98%) in the same manner as in Example 1 except that 154.6 parts of p-tert-butylphenol was used in place of a monohydric phenol having a structural formula represented by the formula [4]. The obtained polycarbonate had a ηₛₚ of 0.840 dl/g and a Tg of 180°C. The content of polysiloxane in the polycarbonate was 0.50% (feed rate: 0.48%). A cast film was prepared from the obtained polycarbonate in the same manner as in Example 1, and measurements of contact angle and friction coefficient and a Taber abrasion test were conducted. The results are shown in Table 1.

### Comparative Example 4

A polycarbonate was obtained (polymer yield: 98%) in the same manner as in Example 1 except that a monohydric phenol having a structural formula represented by the formula [2] was not used and that 172.7 parts of p-tert-butylphenol was used in place of a monohydric phenol having a structural formula represented by the formula [4]. The obtained polycarbonate had a ηₛₚ of 0.859 dl/g and a Tg of 182°c. The content of polysiloxane in the polycarbonate was 0% (feed rate: 0%). A cast film was prepared from the obtained polycarbonate in the same manner as in Example 1, and measurements of contact angle and friction coefficient and a Taber abrasion test were conducted. The results are shown in Table 1.

**Table 1**

| | Main Chain Structure | Terminal Blocking Agent | | | | ηₛₚ | Tg | Contact Angle | Friction Coefficient | | Taber Abrasion Amount |
|---|---|---|---|---|---|---|---|---|---|---|---|
| | | [2] | [4] | Other | [4]/[2] | - | °C | ° | Static | Dynamic | mg |
| Ex.1 | BP-Z | [2] -5 | [4] -13 | nil | 7.0 | 1.013 | 178 | 105 | 0.15 | 0.07 | 9.8 |
| Ex.2 | BP-Z | [2] -5 | [4] -11 | nil | 8.5 | 0.774 | 176 | 102 | 0.22 | 0.11 | 9.2 |
| Ex.3 | BP-Z | [2] -5 | [4] -2 | nil | 8.5 | 0.852 | 178 | 106 | 0.27 | 0.12 | 9.6 |
| C.Ex.1 | BP-Z | [2] -5 | nil | nil | 0 | 0.771 | 175 | 104 | 0.25 | 0.16 | 11.8 |
| C.Ex.2 | BP-Z | [2] -5 | [4] -11 | nil | 157 | 0.777 | 175 | 97 | 0.37 | 0.27 | 10.4 |
| C.Ex.3 | BP-Z | [2] -5 | nil | p-t-butylphenol | 0 | 0.840 | 180 | 106 | 0.29 | 0.14 | 11.0 |
| C.Ex.4 | BP-Z | nil | nil | p-t-butylphenol | nil | 0.859 | 182 | 94 | 0.39 | 0.30 | 12.4 |

| | | | | | | | | | | | |
|---|---|---|---|---|---|---|---|---|---|---|---|
| Ex.: Example, C.Ex.: Comparative Example | | | | | | | | | | | |

### Example 4

A polycarbonate having a terminal constitutional unit ratio of [4]/[2] = 8.5 in terms of molar ratio was obtained (polymer yield: 96%) in the same manner as in Example 1 except that 27,636 parts of 2,2-bis(4-hydroxyphenyl)propane (hereinafter may be abbreviated as "BP-A") was used in place of BP-Z and that 175.4 parts of compound represented by [4] -11 was used as a monohydric phenol having a structural formula represented by the formula [4]. The obtained polycarbonate had a ηₛₚ of 0.924 dl/g and a Tg of 152°C. The content of polysiloxane in the polycarbonate was 0.44% (feed rate: 0.54%). A cast film was prepared from the obtained polycarbonate in the same manner as in Example 1, and measurements of contact angle and friction coefficient and a Taber abrasion test were conducted. The results are shown in Table 2.

### Example 5

A polycarbonate having a terminal constitutional unit ratio of [4]/[2] = 1.1 in terms of molar ratio was obtained (polymer yield: 94%) in the same manner as in Example 1 except that 27,636 parts of BP-A was used in place of BP-Z, that 102.7 parts of compound represented by [4]-11 was used as a monohydric phenol having a structural formula represented by the formula [4] and that 774.0 parts of compound represented by [2]-5 (n = 8 to 10) was used as a monohydric phenol having a structural formula represented by the formula [2]. The obtained polycarbonate had a ηₛₚ of 0.874 dl/g and a Tg of 148°C. The content of polysiloxane in the polycarbonate was 2.18% (feed rate: 2.39%). A cast film was prepared from the obtained polycarbonate in the same manner as in Example 1, and measurements of contact angle and friction coefficient and a Taber abrasion test were conducted. The results are shown in Table 2.

### Comparative Example 5

A polycarbonate having a terminal constitutional unit ratio of [4]/[2] = 0 in terms of molar ratio was obtained (polymer yield: 95%) in the same manner as in Example 1 except that 27,636 parts of BP-A was used in place of BP-Z, that 1,713.9 parts of compound represented by [2]-5 (n = 8 to 10) was used as a monohydric phenol having a structure represented by the formula [2] and that a monohydric phenol having a structure represented by the formula [4] was not used. The obtained polycarbonate had a ηₛₚ of 0.842 dl/g and a Tg of 148°C. The content of polysiloxane in the polycarbonate was 4.5% (feed rate: 5.2%). A cast film was prepared from the obtained polycarbonate in the same manner as in Example 1, and measurements of contact angle and friction coefficient and a Taber abrasion test were conducted. The results are shown in Table 2.

### Comparative Example 6

A polycarbonate was obtained (polymer yield: 96%) in the same manner as in Example 1 except that 27,636 parts of BP-A was used in place of BP-Z, that 10.3 parts of compound represented by [2] -5 (n = 8 to 10) was used as a monohydric phenol having a structural formula represented by the formula [2] and that 194.8 parts of compound represented by [4] -11 was used as a monohydric phenol having a structural formula represented by the formula [4]. The obtained polycarbonate had a ηₛₚ of 0.845 dl/g and a Tg of 153°C. The content of polysiloxane in the polycarbonate was 0.03% (feed rate: 0.033%). A cast film was prepared from the obtained polycarbonate in the same manner as in Example 1, and measurements of contact angle and friction coefficient and a Taber abrasion test were conducted. The results are shown in Table 2.

**Table 2**

| | Main Chain Structure | Terminal Blocking Agent | | | | ηₛₚ | Tg | Contact Angle | Friction Coefficient | | Taber Abrasion Amount |
|---|---|---|---|---|---|---|---|---|---|---|---|
| | | [2] | [4] | Other | [4]/[2] | - | °C | ° | Static | Dynamic | mg |
| Ex.4 | BP-A | [2] -5 | [4] -11 | nil | 8.5 | 0.924 | 152 | 98 | 1.22 | 0.63 | 23.4 |
| Ex.5 | BP-A | [2] -5 | [4] -11 | nil | 1.1 | 0.874 | 148 | 99 | 1.18 | 0.57 | 23.8 |
| C.Ex.5 | BP-A | [2] -5 | nil | nil | 0 | 0.842 | 148 | 101 | 0.99 | 0.15 | 29.3 |
| C.Ex.6 | BP-A | [2] -5 | [4] -11 | nil | 157 | 0.845 | 153 | 88 | 1.59 | 0.77 | 25.1 |

| | | | | | | | | | | | |
|---|---|---|---|---|---|---|---|---|---|---|---|
| Ex.: Example, C.Ex.: Comparative Example | | | | | | | | | | | |

As is obvious from the results in Tables 1 and 2, it can be seen that the polycarbonate having the specific terminal structure of the present invention has better sliding properties than the conventional polycarbonate having only a polysiloxane at terminals.

### Comparative Example 7

A polycarbonate was obtained (polymer yield: 98%) in the same manner as in Comparative Example 4 except that 27,636 parts by weight of BP-A was used in place of BP-Z. The obtained polycarbonate had a ηₛₚ of 0.846 dl/g and a Tg of 152°C.

### Example 6 and Comparative Examples 8 and 9

Molded articles were produced from the polycarbonates obtained in Example 5 and Comparative Examples 6 and 7 and evaluated for flame retardancy in the following manner.

That is, based on 100 parts by weight of each of the polycarbonates, 0.01 parts by weight of potassium perfluorobutane sulfonate (MEGAFACE F-114P of DAINIPPON INK AND CHEMICALS, INCORPORATED.) and 0.05 parts by weight of phosphite stabilizer (Irgafos168 of Ciba Specialty Chemicals Inc.) were pre-blended. Then, the blend was fed into a first inlet located at the base of screws of vented twin-screw extruder (TEX-30XSST of Japan Steel Works, Ltd.) having a screw diameter of 30 mm and extruded under a vacuum of 3 kPa by a vacuum pump at a cylinder temperature of 330 to 360°c (increased virtually uniformly from the barrel at the base of the screws to the die), a screw rotation speed of 180 rpm and a discharge rate per hour of 15 kg. The extruded strands were cooled in a water bath and cut and pelletized by a pelletizer to obtain a resin composition.

Pellets produced by use of the polycarbonate obtained in Example 5 were named COM-6, pellets produced by use of the polycarbonate obtained in Comparative Example 6 were named COM-8, and pellets produced by use of the polycarbonate obtained in Comparative Example 7 were named COM-9.

After the obtained pellets were dried by use of a hot-air circulating dryer at 120°C for 6 hours, a flame test piece conforming to the UL standard 94 and having a thickness of 1.6 mm was molded by an injection molding machine (product of Sumitomo Heavy Industries, Ltd.: SG-150U) at a cylinder temperature of 380°C, a mold temperature of 100°C and a molding cycle of 40 seconds. A vertical flame test of the UL standard 94 was conducted by use of the test piece, and the test piece was ranked based on the standard.

**Table 3**

| | Composition No. | Content of Polycarbonate | | | | | | | | Flame Retardancy of Composition (*) |
|---|---|---|---|---|---|---|---|---|---|---|
| | | Synthesis Example | Main Chain Structure | Terminal Blocking Agent | | | | ηₛₚ | Tg | |
| | | | | [2] | [4] | Other | [4]/[2] | - | °C | - |
| Ex.6 | COM-6 | Ex.5 | BP-A | [2] -5 | [4] -11 | nil | 1.1 | 0.874 | 148 | V-O |
| C.Ex.8 | COM-8 | C.Ex.6 | BP-A | [2] -5 | [4] -11 | nil | 157 | 0.845 | 153 | not-V |
| C.Ex.9 | COM-9 | C.Ex.7 | BP-A | nil | nil | p-t-butylphenol | - | 0.846 | 152 | not-V |

| | | | | | | | | | | |
|---|---|---|---|---|---|---|---|---|---|---|
| Ex.: Example, C.Ex.: Comparative Example * Based on 100 parts by weight of polycarbonate, 0.01 parts by weight of potassium perfluorobutane sulfonate and 0.05 parts by weight of phosphite stabilizer were blended. | | | | | | | | | | |

As is obvious from Table 3, it can be seen that the polycarbonate of the present invention has excellent flame retardancy and that the resin composition (COM-6) prepared by incorporating a small amount of flame retardant into the polycarbonate exerts higher flame retarding performance than the resin compositions (COM-8 and COM-9) of the comparative examples.

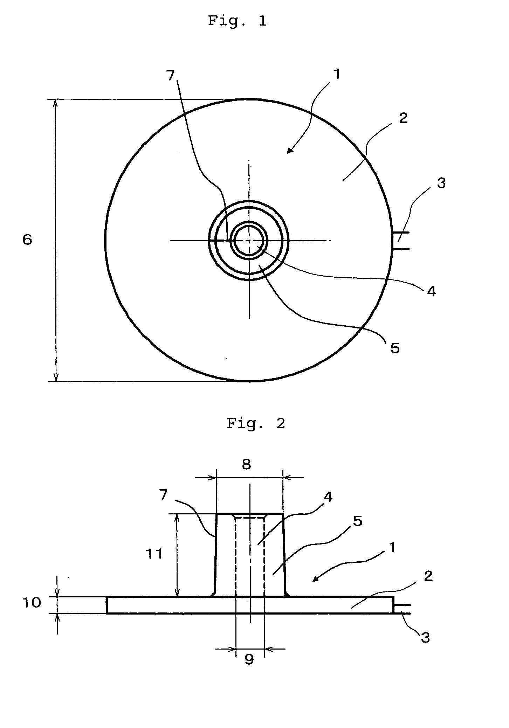

Further, by use of molded articles for evaluating self-tap strength shown in Figs. 1 and 2 (internal diameter of boss: 3.495 to 3.505 mm) from the pellets prepared in evaluation of flame retardancy (COM-6, COM-8 and COM-9), weld tap strength was evaluated (screw for evaluation: B tight screw (product of NITTO SEIKO CO., LTD.) having a screw diameter of 4 mm (M4) and a screw length of 8 mm). The fracture form of the bosses was crushed screw thread. As to the ratio (Tb/Tf) of breakdown torque (Tb) to tightening torque (Tf), the value of COM-6 was at least 1.25 times larger than those of COM-8 and COM-9. That is, the polycarbonate resin of the present invention and resin compositions resulting from adding various additives and other resins to the above resin are excellent in self-tap resistance and are useful for various housing of notebook-sized personal computer, camera, liquid crystal display television and the like that require the resistance.

### Effects of the Invention

The polycarbonate of the present invention is excellent in both slipperiness and abrasion resistance. According to the production method of the present invention, a polycarbonate which is excellent in both slipperiness and abrasion resistance can be produced. The molded article of the present invention is excellent in slipperiness, abrasion resistance and flame retardancy.

### Industrial Applicability

The polycarbonate of the present invention is used for various molding materials and polymer alloy materials, in particular, materials for components of electronics products. Further, it is useful for housing of notebook-sized personal computer, camera, liquid crystal display television and the like.

## Claims

1. A polycarbonate comprising a recurring unit represented by the following formula [1]: 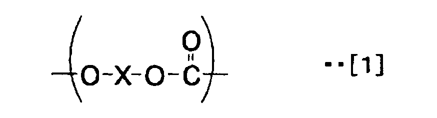 wherein X represents an aliphatic hydrocarbon group or aromatic hydrocarbon group,
and having, at terminals, a group (s) represented by the following formula(s) [4] and/or [2]: 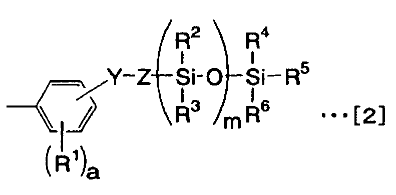 wherein Y represents a group selected from the class consisting of a single bond, O, CO, COO, NHCO, S, SO and SO₂,
Z represents a substituted or unsubstituted alkylene group having 1 to 6 carbon atoms,
R¹ represents a group selected from the class consisting of a hydrogen atom, halogen atom, alkyl group having 1 to 10 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 10 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group, and when a plurality of R¹s exist, they may be the same or different,
R² and R³ each independently represent a group selected from the class consisting of an alkyl group having 1 to 10 carbon atoms, cycloalkyl group having 6 to 20 carbon atoms, alkenyl group having 2 to 10 carbon atoms, aryl group having 6 to 10 carbon atoms, aralkyl group having 7 to 20 carbon atoms and a group represented by the following formula [3]: 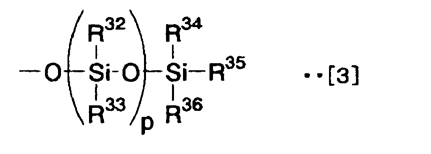 wherein R³², R³³, R³⁴, R³⁵ and R³⁶ each independently represent a group selected from the class consisting of an alkyl group having 1 to 10 carbon atoms, cycloalkyl group having 6 to 20 carbon atoms, alkenyl group having 2 to 10 carbon atoms, aryl group having 6 to 10 carbon atoms and aralkyl group having 7 to 20 carbon atoms, and p is an integer of 1 to 100,
and when a plurality of R²s and R³s exist, they may be the same or different,
R⁴, R⁵ and R⁶ each independently represent a group selected from the class consisting of an alkyl group having 1 to 10 carbon atoms, cycloalkyl group having 6 to 20 carbon atoms, alkenyl group having 2 to 10 carbon atoms, aryl group having 6 to 10 carbon atoms and aralkyl group having 7 to 20 carbon atoms,
a is an integer of 1 to 4, and
m is an integer of 1 to 100,
-**Ar** **[4]**
wherein Ar represents at least one group selected from four formulas in the following group [5]: 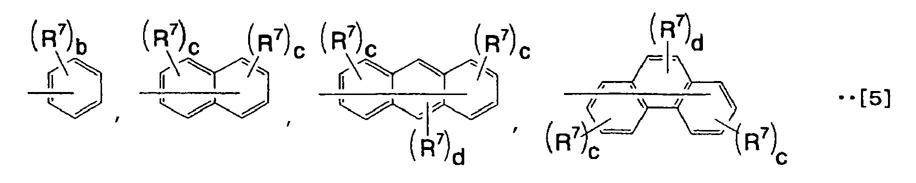 wherein R⁷s each independently represent, among the four formulas and in each of the formulas, a substituted or unsubstituted aryl group having 6 to 20 carbon atoms and when a plurality of R⁷s exist, they may be the same or different, b is an integer of 1 to 5, c is an integer of 0 to 4, d is an integer of 0 to 2, and a straight line that crosses condensed aromatic rings represents a bonding hand, and the bonding hand may come out of any of the aromatic rings that it crosses,
the molar ratio ([4]/[2]) of the group represented by the formula [4] to the group represented by the formula [2] satisfying 0 < [4]/[2] < 150.

2. The polycarbonate of claim 1, wherein X is represented by the following formula [6]: 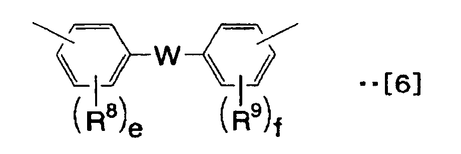 wherein R³ and R⁹ each independently represent a group selected from the class consisting of a hydrogen atom, halogen atom, alkyl group having 1 to 10 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 10 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group, and when a plurality of R⁸s and R⁹s exist, they may be the same or different; e and f are each independently an integer of 1 to 4; and W is a single bond or at least one group selected from the following group [7] : 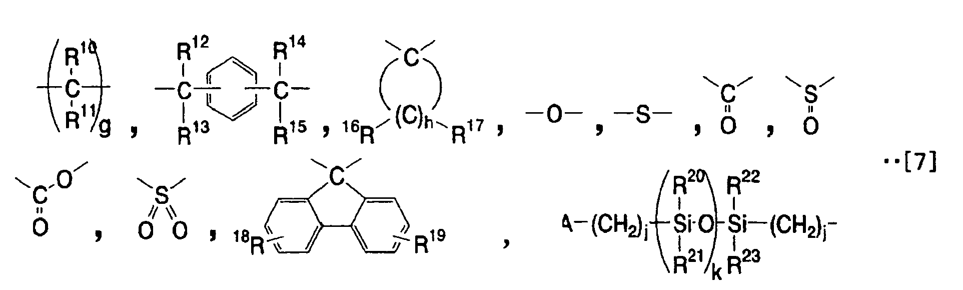 wherein R¹⁰, R¹¹, R¹², R¹³, R¹⁴, R¹⁵, R¹⁶ and R¹⁷ each independently represent a group selected from the class consisting of a hydrogen atom, alkyl group having 1 to 10 carbon atoms, aryl group having 6 to 10 carbon atoms and aralkyl group having 7 to 20 carbon atoms, and when a plurality of these exist, they may be the same or different,
R¹⁸ and R¹⁹ each independently represent a group selected from the class consisting of a hydrogen atom, halogen atom, alkyl group having 1 to 10 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 10 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group,
R²⁰, R²¹, R²² and R²³ each independently represent a group selected from the class consisting of an alkyl group having 1 to 10 carbon atoms, cycloalkyl group having 6 to 20 carbon atoms, alkenyl group having 2 to 10 carbon atoms, aryl group having 6 to 10 carbon atoms and aralkyl group having 7 to 20 carbon atoms, and when a plurality of these exist, they may be the same or different,
g is an integer of 1 to 10, h is an integer of 4 to 7,
j is an integer of 1 to 3, and k is an integer of 1 to 100.

3. The polycarbonate of claim 1, wherein X is at least one selected from the class consisting of groups represented by the following formulas.

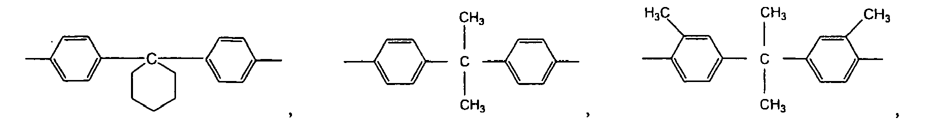

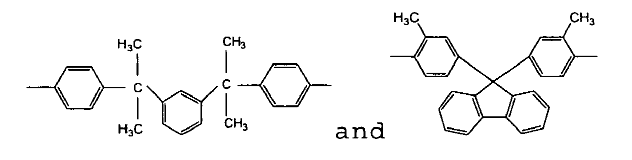

4. The polycarbonate of claim 1, wherein in the group represented by the formula [2], Y is a single bond, Z is an ethylene group or trimethylene group, m is an integer of 5 to 10, R⁴ and R⁶ are a methyl group, R⁵ is a methyl group or tetramethylene group, and a is a hydrogen atom, methyl group or phenyl group.

5. The polycarbonate of claim 1, wherein the group represented by the formula [4] is 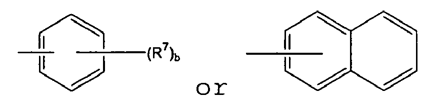 wherein R⁷ is a phenyl group, and b is 1 or 2.

6. The polycarbonate of claim 1, wherein a solution prepared by dissolving 0.7 g of the polycarbonate in 100 ml of methylene chloride shows a specific viscosity of 0.2 to 1.5 at 20°C.

7. The polycarbonate of claim 1, wherein the molar ratio ([4]/[2]) of the group represented by the formula [4] to the group represented by the formula [2] satisfies 0.5 < [4]/[2] < 90.

8. The polycarbonate of claim 1, wherein the molar ratio ([4]/[2]) of the group represented by the formula [4] to the group represented by the formula [2] satisfies 1 < [4]/[2] < 70.

9. A method for producing a polycarbonate by reacting a dihydroxy compound, a carbonate precursor and a terminal blocking agent, wherein the terminal blocking agent comprises a compound (component A) having a group represented by the formula [2] and a compound (component B) having a group represented by the formula [4], and the molar ratio (component B/component A) of the component B to the component A satisfies 0 < component B/component A < 150.

10. The method of claim 9, wherein 0.5 < component B/component A < 90 is satisfied.

11. The method of claim 9, wherein 1 < component B/component A < 70 is satisfied.

12. The method of claim 9, wherein the dihydroxy compound is a compound represented by the following formula [8]: 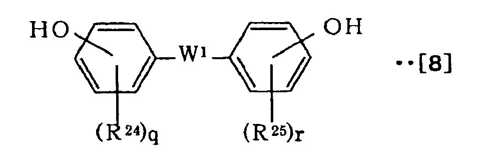 wherein R²⁴ and R²⁵ each independently represent a group selected from the class consisting of a hydrogen atom, halogen atom, alkyl group having 1 to 10 carbon atoms, alkoxy group having 1 to 10 carbon atoms, cycloalkyl group having 6 to 20 carbon atoms, cycloalkoxy group having 6 to 20 carbon atoms, alkenyl group having 2 to 10 carbon atoms, aryl group having 6 to 10 carbon atoms, aryloxy group having 6 to 10 carbon atoms, aralkyl group having 7 to 20 carbon atoms, aralkyloxy group having 7 to 20 carbon atoms, nitro group, aldehyde group, cyano group and carboxyl group, and when a plurality of R²⁴s and R²⁵s exist, they may be the same or different; q and r are each independently an integer of 1 to 4; and W¹ is a single bond or at least one group selected from the class consisting of groups represented by the formulas (7).

13. A molded article comprising the polycarbonate of claims 1 to 8.
